# EUROPEAN PATENT APPLICATION

(11) **EP 2 868 469 A1**
(43) Date of publication of application: **06.05.2015**
(21) Application number: 13306498.0
(22) Date of filing: 31.10.2013
(51) Int. Cl.: B32B 7/12, B32B 15/01, B32B 15/20, B32B 37/12, E04B 1/94, E04F 13/12

(54) **Double sheet aluminum panel and method for manufacture thereof**

(71) Applicant: Alcoa Architectural Products SAS, 68500 Merxheim (FR)
(72) Inventor: Quiquerez, Laure, 68700 Michelbach (FR); Rominger, Eric, 68127 Niederhergheim (FR)
(74) Representative: Becker, Philippe

(57) **Abstract**

The present invention relates to a double sheet aluminum panel (1) and a method for manufacture thereof. The double sheet aluminum panel consists of a first layer (2) of a first aluminum material attached to a second layer (4) of a second aluminum material. The first and second layers are attached to each other by means of an adhesive layer (3) disposed between the first and second layers (2, 4). The inventive double sheet aluminum panel is non-flammable.

## Description

The present invention relates to a double sheet aluminum panel according to the subject-matter of independent claim 1. Furthermore, the invention provides a method for manufacturing such a double sheet aluminum panel.

Due to their exceptional mechanical properties, composite panels have a wide variety of application such as aircraft construction or architecture. In architecture, for instance, composite panels are used for external walls, shop awnings, signage and ceilings. Depending on their composition, composite panels can exhibit many advantageous features such as being weather proof, noise absorbing, fireproof, light and easy to cut, impact resistant and easy to maintain. Composite panels are also known as sandwich elements, as they commonly consist of a plurality of different layers arranged on top of each other. In many cases, composite panels exhibit at least three layers, in particular a core layer as well as two outer layers attached to either side of the core.

Above all, aluminum composite panels are utilized in architectural applications, such as the cladding of buildings. Although, aluminum composite panels are exceedingly light weight, they exhibit high durability and are easy to process. In consequence of their application in hospitals, tunnels and stadiums, however, there is a need for composite panels which are incombustible. This requirement is specified within the European-standard EN 13501-1. Depending on properties like fire performance, smoke generation, burning droplets etc. materials are classified in different categories. A general view of the different classes specified by the European standard, in comparison with the national standards in Germany and France, is depicted in table 1 (effective July 2010).

**Table 1: Overview of European, German, French flammability classification**

| **Flammability** | **Europe (EN-13501)** | **Germany (DIN 4102)** | **France (NF-P92501)** |
|---|---|---|---|
| Non-flammable | A1, A2-s1 d0 | A1, A2 | M0 |
| Low flammability | A2-s2 d0, B, C | B1 | M1 , M2 |
| Moderate flammability | D, E | B2 | M3 |
| High flammability | F | B3 | M4 |

In order to provide a material that fulfils the criteria to be non-combustible, it must be classified as A1 or A2 - s1 d0 (s = smoke generation, d = burning droplets), according to the European standard EN-13501. In this regard, the core material is subjected to various tests, such as the measurement of its calorific value, defined by ISO 1716. As to that, the requirement for a classification of non-flammability, according to the European standard, is a heat of combustion that does not exceed 3.0 MJ/kg. By contrast, the French standard even stipulates a heat of combustion no higher than 2.5 MJ/kg in order to obtain a "M0" classification for tested product.

In order to achieve these ambitious requirements of the European standard EN 13501, composite panels known from the state of the art comprise metallic or non-metallic strips that are attached to both sides of the core layer, which comprises very specific compositions of non-flammable materials. In particular, these known composite panels frequently use organic or inorganic, non-flammable materials in order to build the core layer. However, these core layers of organic or inorganic nature are comparatively heavy and lead to a lack of flexibility, those are often not capable of absorbing the deformations resulting from mechanical stresses due to thermal expansions of the cover layers. Moreover, the common composite panel, having a relatively thick core layer, often requires a substantial effort in order to manufacture the latter.

On the basis of the problems outlined above, it is an object of the present invention to provide a non-combustible aluminum panel, fulfilling the European, German and French standard, which is easy to produce and exhibits a flexibility, which is capable of absorbing the deformations resulting from mechanical stresses of the cover layers. Furthermore, it is an objective to provide an aluminum panel, which is particularly easy to handle.

To this end, the invention relates to a double sheet aluminium panel, which consists of two aluminum layers attached to each other by means of an adhesive layer disposed there between. In more detail, the double sheet aluminum panel of the present invention consists of a first layer of a first aluminum material attached to a second layer of a second aluminum material. The first and second layers are attached to each other by means of an adhesive layer disposed between the first and second layer.

In other words, the present invention does not comprise a particular core layer comprising organic and/or inorganic ingredients in order to provide non-flammability of the aluminum sheet panel. Rather, it was surprisingly discovered that a double sheet aluminum panel consisting of two aluminum layers attached to each other by means of an adhesive layer, at least fulfils the requirements of the A2 - s1,d0 /A2 / M0 class according to European, German and French fire certifications.

In general, the adhesive layer of the present invention may be of type such as an epoxy, acrylic, phenolic, polysulfone or polyimide resin. Preferably, however, the adhesive layer may comprise a thermoplastic or most preferably a thermosetting polymer. It was found that using a thermosetting polymer adhesive provides for a strong bond, whilst the non-flammability of the inventive composite panel is maintained.

Of course, the double sheet aluminum panel according to the present invention exhibits various advantages compared with the commonly known composite panels. In particular, the inventive double sheet aluminum panel is particularly easy to produce and provides for a low-cost option for producing cladding elements. In more detail, the double sheet aluminum panel of the present invention exhibits similar mechanical properties compared to a monolithic panel. In absence of various materials combined as a core layer, the double sheet aluminum panel of the present invention is lightweight, that is easy to handle especially when being used for the cladding of a modern high-rise building. Of course, the present composite panel is also comparatively easy to produce. In some instances, it may even be cheaper to produce the inventive double sheet aluminum panel instead of a monolithic aluminum panel having the same thickness. Finally, it should be noted that the double sheet aluminum panel of the present invention is fully recyclable and thus particularly environment friendly.

Further embodiments according to the present invention are described in the dependent claims.

According to a further embodiment of the inventive double sheet aluminum panel, the first aluminum material is substantially the same as the second aluminum material. In this regard, it should be noted that "substantially the same" refers to the fact that any aluminum material produced, whether it is "pure" aluminum or an aluminum alloy, comprises impurities to at least some degree. Substantially the same, therefore, means that the first and second aluminum materials are produced in the same way so as to exhibit almost identical structures. Alternatively it is also conceivable that the first aluminum material is different from the second aluminum material. In particular, it may be desirable to provide a bright finishing aluminum of an aluminum or aluminum alloy as the first aluminum material, which is attached to the second layer made of the second aluminum material being composed of a high strength aluminum or aluminum alloy. In this way, the present invention provides for a bright finish high strength aluminum or aluminum alloy panel, which is particularly lightweight.

With reference to another aspect of the present invention, the first and/or the second layer of the double sheet aluminum panel comprise cover layers on their outer surfaces. These cover layers may be paint layers, in order to increase the aesthetic appearance of the panel. The cover layers may be produced from flammable and/or non-flammable material as long as the non-flammability of the aluminum panel is maintained. The cover layers may be applied in any known manner, such as wet paint or strips of painted material applied to the outer surfaces of the first and/or second layer.

The aluminum material of the first and second layers may be any aluminum material, i.e. pure or alloys, known in the state of the art. However, according to another embodiment, it is preferred to produce the first and second layers of the inventive double sheet aluminum panel from aluminum-magnesium or aluminummanganese alloys, which are both lighter than other aluminum alloys and much less flammable. In more detail, the first and/or second aluminum material of the first/second layer can be made from a 3.000 or 5.000 series aluminum alloy.

In another embodiment of the present invention, the first and second layers of the double sheet aluminum panel comprise substantially the same thickness. Preferably, both, the first and second layers comprise a thickness which is between 0.5 and 5 mm preferably between 1 and 3 mm and in particular 1.25 mm, 1.5 mm or 2 mm. Most preferably, the thickness of the first and second layers is 1.5 mm, so as to produce a double sheet aluminum panel which is about 3 mm thick. Alternatively, it is also conceivable that the first and second layers comprise a different thickness. In this regard, it should be noted, that the double sheet aluminum panel preferably has a total thickness of 1 to 10 mm, preferably 2 mm, 2.5 mm or 3 mm. Consequently, the first and second layers are complementary to each other so as to produce a double sheet aluminum panel which has the preferred thickness between 1.5 to 10 mm. Most preferably the double sheet aluminum panel is constructed to be about 3 mm thick.

As already indicated before, the present invention also relates to a method, manufacturing a double sheet aluminum panel for cladding elements comprising the following steps:
- providing a sheet of a first aluminum material;
- providing a sheet of a second aluminum material;
- applying an adhesive to inner surfaces of the first and/or the second layers;
- roll bonding the first and second sheets together along their inner surfaces to form a laminate aluminum sheet consisting of two layers of aluminium material attached to each other by means of the adhesive;
- cutting the laminate aluminum sheet into double sheet aluminum panels.

With the aforementioned method, the inventive double sheet aluminum panel can be produced easily in a most cost-efficient manner. Furthermore, due to the roll bonding of the first and second sheets, the aluminium sheets or layers can be bonded together continuously in a composite line. After the roll bonding process, the continuous laminate composite product can be cut into panels of varying sizes in accordance with a potential costumer's needs.

Since the adhesive is preferably a thermosetting polymer, it is heated and cured before roll bonding is performed. In particular, the adhesive may be applied to the inner surfaces of the first and/or second layers, heated and cured before the first and second layers arrive at the rollers of the roll bonding apparatus. The adhesive may be heated together with the first and second layers up to a temperature of 250 C°.

According to another aspect of the present invention, the method may comprise a step for smoothening at least the inner surfaces of the first and second layers by means of abrasion before the adhesive is applied. Additionally, the first and second layers may be suspected to an alkaline, so as to clean the surface before application of the adhesive. Furthermore, the aluminum layers may be subjected to an anodizing step. In particular, the aluminum layers may be passed through a series of chemical baths. The first bath, the chemical degreaser/cleaner stage, cleans the aluminum of all oils, grease, loose oxides, etc. in order to promote the growth of a uniform anodic layer. The next stage may be a rinse stage, which removes any cleaning residue from the first and second layers. Thereafter, the first and second layers could be passed through a second bath with phosphoric acid as an anodizing substance. After anodizing, the aluminum layers are again rinsed to remove remaining anodizing solution. Finally, the first and second layers may be dried before applying the adhesive to the inner surfaces thereof.

According to another embodiment, at least the inner surfaces of the first and second layers are treated with a conversion coating before the adhesive is applied. The purpose of the conversion coating is to enhance the corrosion resistance of the final product and to improve the strength of the bond between the two aluminum layers. The solutions applied as conversion coatings can comprise hexavalent chromium, fluoride ions, tungsten, vanadium or molybdenum. The conversion coating may be applied by spraying the conversion coating solution onto the at least inner surface of the first and second layers, running the first and second layers through a bath of conversion coating solution or applying the conversion coating solution to the aluminum surfaces with one or more rollers. After the conversion coating has been applied to the surfaces of first and second layers, the substrate generally has to be dried before the adhesive is applied.

The adhesive application can be performed by any technique known by the state of the art. In particular, such techniques may include roll coating, reversal coating, spraying, impregnation coating, folding etc.

In addition to the aforementioned method steps, the first and/or second layers may be heat treated before roll bonding is performed. Alternatively or additionally, the first and second layers may pre-stressed, before the adhesive is applied. In particular, the first and second layers may be stressed more than the specific elastic elongation of the aluminum material and less than the specific brake elongation. In the following, the inventive double sheet aluminum panel and method for manufacturing the double sheet aluminum panel is explained in more detail with reference to the exemplary embodiment shown.

The Figures show:
- Fig. 1a: a schematic sectional view of a double sheet aluminum panel according to a first embodiment of the present invention;
- Fig. 1b: a schematic sectional view of a double sheet aluminum panel according to a second embodiment of the present invention;
- Fig. 2: a schematic view of an apparatus for manufacturing a double sheet aluminum panel according to the inventive method.

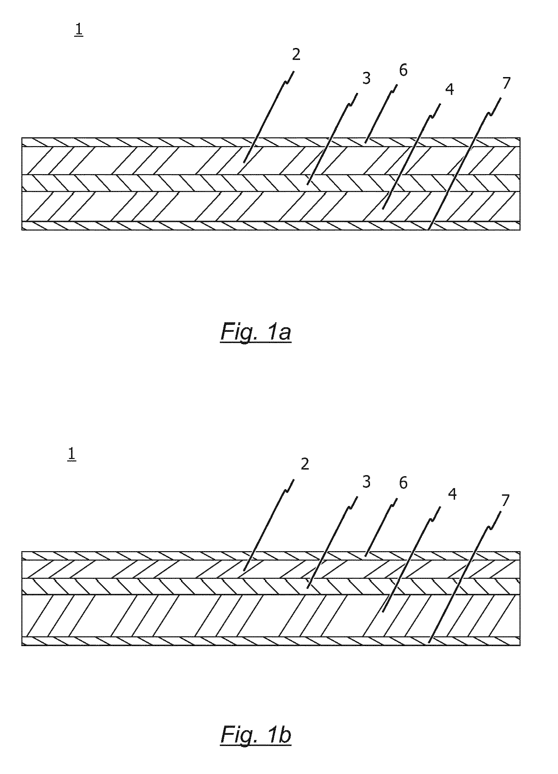

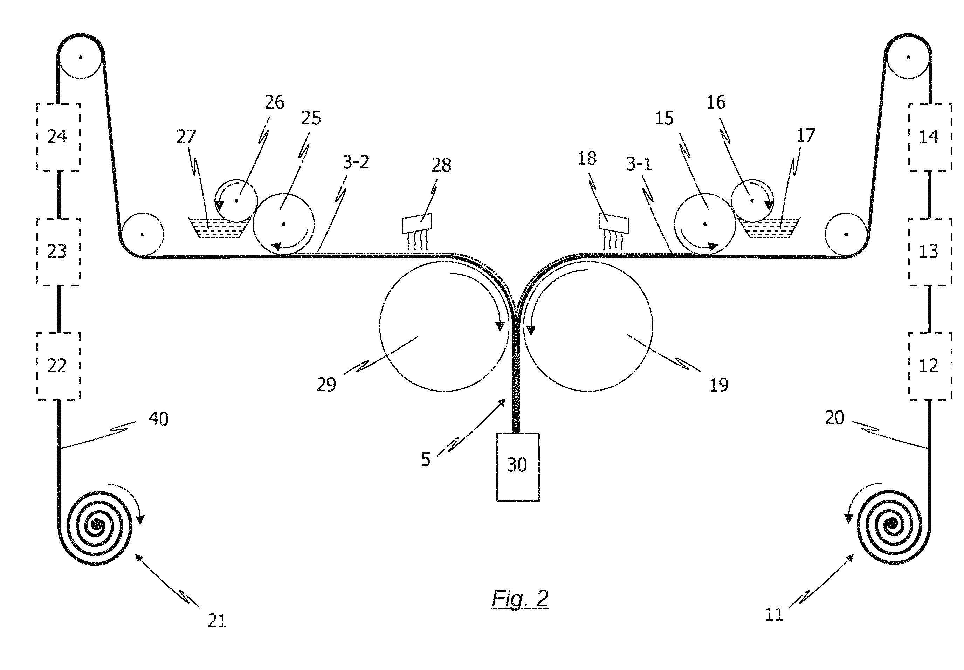

Figures 1a and 1b show first and second embodiments of a double sheet aluminum panel in accordance with the present invention. In particular, the double sheet aluminum panels shown in Figures 1a and 1b consist of a first layer 2 of a first aluminum material attached to a second layer 4 of a second aluminum material. The first and second layers 2, 4 are attached to each other by means of an adhesive layer 3, which is disposed between the first and second layers 2, 4. The adhesive layer 3 may preferably comprises a thermosetting polymer adhesive. As will be described in more detail below with reference to Fig. 2, the adhesive layer 3 may be composed of 2 individual adhesive layers 3-1, 3-2 combined during roll bonding.

As already mentioned above, the first aluminum material is preferably substantially the same as the second aluminum material. In particular, the first aluminum material and second aluminum material of the first and second layers 2, 4 are preferably made from a 3.000 or 5.000 series aluminum alloy.

In the first embodiment according to Fig. 1a, the first and second layers 2, 4 comprise substantially the same thickness. In more detail, the first and second layers may comprise a thickness of 1.5 mm, so as to provide for a double sheet aluminum panel having a thickness of 3 mm. Of course, the adhesive layer 3 does not significantly contribute to the thickness of the double sheet aluminum panel. Rather, the thickness of the adhesive layer 3, depicted in Figures 1a and 1b is illustrated schematically and not to measure.

Fig. 1b, on the other hand, shows a second embodiment of the double sheet aluminum panel, wherein the first and second layers 2, 4 comprise a different thickness. According to this embodiment, the first layer 2 is thinner than the second layer 4 such that mainly the second layer 4 provides for the mechanical properties of the double sheet aluminum panel 1 and allows larger possibility in terms of formability.

Figures 1a and 1b additionally illustrate that the first and second layers 2, 4 may comprise outer layers 6, 7 which may be decorative layers of paint, printed vinyl, polyester, polyurethane, polyolefin, paper or any combination thereof. Preferably, the decorative layers may consist of paint that simulates various building materials including but not limited to wood grain patterns, stone, rock, any type of painted surfaces, etc.

A method and apparatus for manufacturing the double sheet aluminum panel 1 in accordance with the present invention is schematically shown by Fig. 2. According to the method of the present invention, first and second sheets 20, 40 of first and second aluminum materials are provided. As can be seen from the schematic drawing, these sheets of aluminum material may be provided on coils 11, 21. Alternatively, the aluminum sheets may be provided directly after production thereof.

The first and second aluminum sheets 20, 40 may be pre-treated by optional pre-treating sections 12, 22. As mentioned before, such pre-treatment may include smoothening, cleaning, anodization, heat treatment or pre-stressing of the first and second sheets 20, 40. Afterwards, the outer and inner surfaces of the pre-treated sheets 20, 40 may be treated with a conversion coating at conversion coating sections 13, 23. Subsequently, the outer and inner surfaces of treated sheets 20,40 may be painted at painting sections 14, 24. It should be noted, that all of the aforementioned sections 12, 13, 14, 22, 23 and 24 are completely optional and not necessarily part of the inventive method.

The treated aluminum sheets 20, 30 are then passed through an adhesive roll coater operation to apply an adhesive layer 3-1, 3-2. At a tray 17, 27 an adhesive is gathered by a pick-up roll 26, which transfers the adhesive solution to an applicator roll 15, 25. The applicator roll 15, 25 applies the adhesive solution to the moving sheets 20, 40, preferably rotating in opposite directions, e.g. such as by a revers roll coater.

Of course, it is also conceivable to apply the adhesive solution by other methods such as by spraying but roll application is considered to be the best for a uniform thin coating. The adhesive coated sheets 20, 40 are subsequently cured in curing section 18, 28 to form two individual sheets with a respective adhesive layer 3-1, 3-2, preferably thermoset adhesive layers.

After applying the adhesive to the inner surfaces of the first and second sheets 20, 40, the sheets are subjected to a roll bonding process at pressure rollers 19, 29 so as to form a roll bonded laminate composite sheet 5.

As a last step, the laminate composite sheet 5 is introduced into a post processing section 30, in which the laminate composite sheet 5 may be cooled, cut and stacked into individual double sheet aluminum panels according to the present invention. In this regard, it should be noted that the method of the present invention provides for a continuous production of double sheet aluminum panels in accordance with the present invention.

The present invention is not limited to the specific embodiments shown in the respective Figures.

### List of references

- 1: double sheet aluminum panel
- 2: first layer
- 3: adhesive layer
- 4: second layer
- 5: laminate composite sheet
- 6, 7: outer layer
- 11, 21: coil of aluminum sheet
- 12, 22: pre-treating section
- 13, 23: conversion coating application section
- 14, 24: painting section
- 15, 25: applicator roll
- 16, 26: pick-up roll
- 17, 27: tray
- 18, 28: curing section
- 19, 29: pressure roll
- 20: first aluminum sheet
- 30: post treatment section
- 40: second aluminum sheet

## Claims

**1.** A double sheet aluminum panel (1) consisting of a first layer (2) of a first aluminum material attached to a second layer (4) of a second aluminum material, the first and second layers being attached to each other by means of an adhesive layer (3) disposed between the first and second layers (2, 4).

**2.** The double sheet aluminum panel (1) according to claim 1,
wherein the first aluminum material is substantially the same as the second aluminum material.

**3.** The double sheet aluminum panel (1) according to claim 1,
wherein the first aluminum material is different from the second aluminum material.

**4.** The double sheet aluminum panel (1) according to claim 2 or 3,
wherein the first aluminum material of the first layer (2) is a 3000 or 5000 series aluminum alloy.

**5.** The double sheet aluminum panel (1) according to any of claims 2 to 4,
wherein the second aluminum material of the second layer (4) is a 3000 or 5000 series aluminum alloy.

**6.** The double sheet aluminum panel (1) according to any of claims 1 to 5,
wherein the first and second layers (2, 4) comprise substantially the same thickness.

**7.** The double sheet aluminum panel (1) according to any of claims 1 to 5,
wherein the first and second layers (2, 4) comprise a different thickness.

**8.** The double sheet aluminum panel (1) according to any of claims 1 to 7,
wherein the double sheet aluminum panel (1) has a thickness of 1 to 10 mm.

**9.** A method for manufacturing a double sheet aluminum panel for cladding elements comprising the following steps:
• providing a first sheet of a first aluminum material;
• providing a second sheet of a second aluminum material;
• applying an adhesive to inner surfaces of the first and/or second layers;
• roll bonding the first and second sheets together along their inner surfaces to form a laminate aluminum sheet consisting of two layers of aluminum material attached to each other by means of the adhesive;
• cutting the laminate aluminum sheet into double sheet aluminum panels.

**11.** The method according to claim 11,
wherein the adhesive is heated before roll bonding is performed.

**12.** The method according to claim 11 or 12,
wherein at least the inner surfaces of the first and second layers are smoothened by means of abrasion before the adhesive is applied.

**13.** The method according to any of claims 10 to 12,
wherein at least the inner surfaces of the first and second layers are treated with conversion coating before the adhesive is applied.

**14.** The method according to any of claims 10 to 13,
wherein at least the outer surfaces of the first and second layers are treated with paint before the adhesive is applied.

**15.** The method according to any of claims 10 to 14,
wherein rolling is performed by means of pressure rollers in such a way that a double sheet aluminum panel having a thickness of 1 to 10 mm is produced.
